# EUROPEAN PATENT APPLICATION

(11) **EP 1 980 378 A1**
(43) Date of publication of application: **15.10.2008**
(21) Application number: 08154308.4
(22) Date of filing: 10.04.2008
(51) Int. Cl.: B28D 1/04

(54) **Coring tool and connected method of production**

(30) Priority: 11.04.2007 IT UD20070067; 21.12.2007 IT UD20070241
(71) Applicant: Carbodrill Srl, 36100 Vincenza (IT)
(72) Inventor: Fontana, Giampaolo, 36033, Isola Vicentina (VI) (IT); Fontana, Marco, 36033, Isola Vicentina (VI) (IT)
(74) Representative: Petraz, Gilberto Luigi

(57) **Abstract**

Tool for coring, for example for walls, comprising a tubular body (11) made of composite material and an appendix (13) for attachment to a machine able to make it rotate. The tubular body (11) includes diamond sectors (19) made on a crown or ring-nut (12) made of composite material or metal.

## Description

### FIELD OF THE INVENTION

The present invention concerns a tool for coring, and the connected method of production, and more particularly a tool suitable to make holes or cores in walls, floors or road surfaces, whether they be made of reinforced concrete, asphalt, marble, granite, terracotta tiles, brick or any other similar material.

### BACKGROUND OF THE INVENTION

Tools are known in the state of the art used for coring and for making holes in walls of various type, including reinforced concrete.

Such tools normally consist of a tube of iron or steel, of variable length and diameter, at one end of which a flange is fixed, suitable for mounting, by means of screwing or quick connection, on a machine suitable to take the tool into the desired position and make it rotate; at the opposite end diamond sectors are welded, which constitute the actual cutting means.

Present day tools have some problems which make them sometimes inefficient or unsuitable to use, and are always expensive.

The main problems of known tools of this type concern the weight and the noise that they generate.

As far as the weight is concerned, it has little effect for small diameter tools, up to 120-130 mm, and tools of limited height, up to 420 mm. However, as the diameter and height increase, the weight becomes a decisive element and conditions the ease of handling and operativeness of the operator.

This causes a reduction in productivity due to the difficulty in maneuvering for the operator, and also makes him prematurely tired; these factors can also affect the efficiency and quality of the operations performed.

As far as the noise is concerned, the structure of known tools determines the emission of a hissing sound, amplified by the soundbox constituted by the metal tube. This problem is even more accentuated considering the extensive time for which the operator has to work, even 8-10 hours continuously, and therefore, in the long term, the loud noise can have a negative effect on productivity and efficiency.

Known solutions that have tried to overcome this problem in any case entail disadvantages of premature wear, following the numerous and repeated operations of holing and/or coring, that is, the insertion and removal of the tube into/from the hole in the wall.

This entails a reduction in the times of use of the tube, and the consequent need to replace it frequently, with the costs and problems deriving from this. Furthermore, the excessive wear on the tube can lead to its being damaged, with risks of it breaking, even during the operating step, with all the ensuing risks for the safety of the worker.

Purpose of the present invention is to obviate all the problems detailed above by means of a solution that brings considerable advantages in operations, management and costs in the use of tools of the type described above.

The Applicant has devised, tested and embodied the present invention to overcome the shortcomings of the state of the art and to obtain other advantages as shown hereafter.

### SUMMARY OF THE INVENTION

The present invention is set forth and characterized in the main claims, while the dependent claims describe variants to the main inventive idea.

A tool for coring, for example walls, according to the invention, comprises a tubular body made of composite material, provided at one end with diamond sectors or teeth, made on a crown or ring-nut able to be attached, for example glued, to one end of the tubular body, and made of metal or composite material. The tubular body also comprises, on the opposite side with respect to the crown or ring-nut, an appendix to attach it to a machine able to make it rotate.

In an advantageous solution of the present invention, the coring tool comprises a reinforcement and protection layer associated with at least part of the length of the tubular body, advantageously the whole length, disposed on the surface or at least in proximity with the surface, with respect to a cross section, of the tubular body.

In a preferential embodiment, the reinforcement and protection layer is made of metal material, advantageously titanium. In another embodiment, the metal material is steel, for example of the enriched type to increase its hardness.

In another embodiment the reinforcement and protection layer is made with a compound based on composite material and ceramic, or other similar composite.

According to a variant of the present invention, the reinforcement and protection layer comprises a sheet wound onto the tubular body.

According to another variant of the present invention, the reinforcement and protection layer comprises a strip wound onto the tubular body.

In one embodiment the strip is wound with the spirals partly overlapping; according to a variant the spirals are perfectly matching so as to constitute a surface-smooth covering, whereas according to another variant, between two adjacent spirals of strip there is a gap in which the tube of composite material underneath can be seen.

According to another variant of the present invention the reinforcement and protection layer is covered by at least a thin layer of composite material, so as both to improve the aesthetic effect of the tool and also to increase its active life.

Advantageously, the reinforcement and protection layer has a thickness comprised between about 700 micron and about 1000 micron.

The reinforcement and protection layer applied on the tubular body made of composite material allows to considerably increase the surface hardness thereof, but without losing those peculiar characteristics of the composite material, that is, lightness, noise-reduction, etc. Therefore, the tubular body is protected from surface wear due to its frequent use, consequently the times of use of the tool are increased and any possible damage to the tool is limited to a minimum. The present invention therefore allows to obtain a tool which is light and resistant at the same time.

According to a preferential embodiment of the present invention, a flange is provided, on which there is an appendix for attachment, by means of screwing or quick connection, to the coring machine; the flange is fixed with suitable glue to the tubular body made of composite material.

According to another variant, the crown bearing the diamond sectors is tapered inside in order to facilitate the extraction of the core material.

### BRIEF DESCRIPTION OF THE DRAWINGS

These and other characteristics of the present invention will become apparent from the following description of some preferential forms of embodiment, given as a non-restrictive example with reference to the attached drawings wherein:
- fig. 1 is an exploded section of a first embodiment of a coring tool according to the present invention;
- fig. 2 is an exploded section of a second embodiment of a coring tool according to the present invention in fig. 1;
- fig. 3 shows the tool in fig 2 in the assembled condition;
- fig. 4 is a first a variant of the tool in fig. 2;
- fig. 5 is a second variant of the tool in fig. 2;
- fig. 6 is a schematic three-dimensional view of a detail of fig. 2; and
- fig. 7 is a schematic three-dimensional view of a variant of the detail in fig. 6.

### DESCRIPTION OF A PREFERENTIAL FORM OF EMBODIMENT

With reference to the attached drawings, the coring tool 10 according to the present invention consists of a tubular body, or tube 11, made of composite material, preferably carbon fiber, a crown or ring-nut 12, which carries the integral diamond sectors 19, and a flange 15 having an appendix 13 to connect it to the machine (not shown in the drawings) which makes it rotate.

The tubular body 11 has a desired height and diameter, according to the needs of the specific application.

The crown or ring-nut 12 can be made of metal or can also be of composite material, for example carbon fiber.

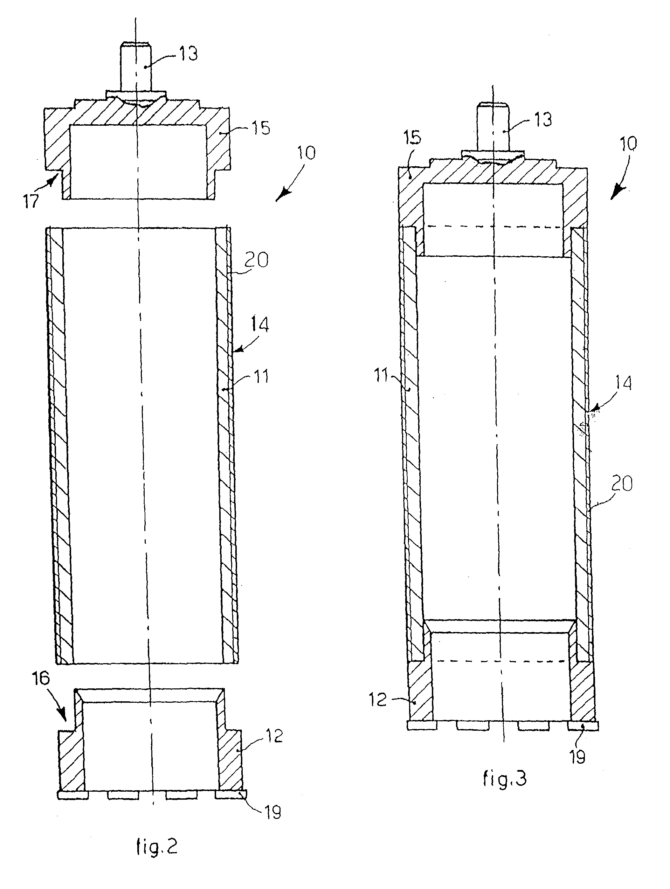

In the embodiment shown in fig. 2, the tubular body 11 also comprises a reinforcement and protection layer 14, made either of metal material, advantageously titanium or enriched steel, or of a compound based on carbon and ceramic, or other similar compound.

The reinforcement and protection layer 14 has a thickness comprised between about 700 micron and about 1000 micron.

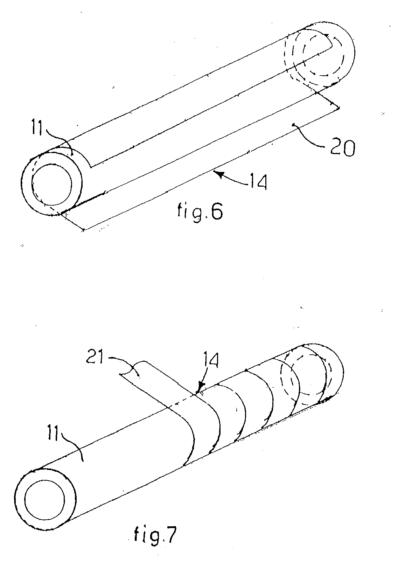

In the embodiment shown in fig. 6, the reinforcement and protection layer 14 substantially consists of a thin sheet 20 wound onto the tubular body 11. It is not excluded that even several overlapping sheets 20 can be used.

In the embodiment shown in fig. 7, the reinforcement and protection layer 14 substantially consists of a strip 21 wound onto the tubular body 11. In this case, the strip 21 is wound in spirals onto the tubular body 11 with its helical spirals adjacent to each other, substantially without any overlap.

The invention also provides that the strip 21 can be wound onto the tubular body with its spirals partly overlapping along the edges, or separated from each other by a determinate pitch.

The flange 15 is preferably made of metal (aluminum or iron) and apart from the appendix 13, also has a supporting ledge 17 For coupling with the upper end of the tube 11. It is not excluded that the flange 15 may be made of plastic.

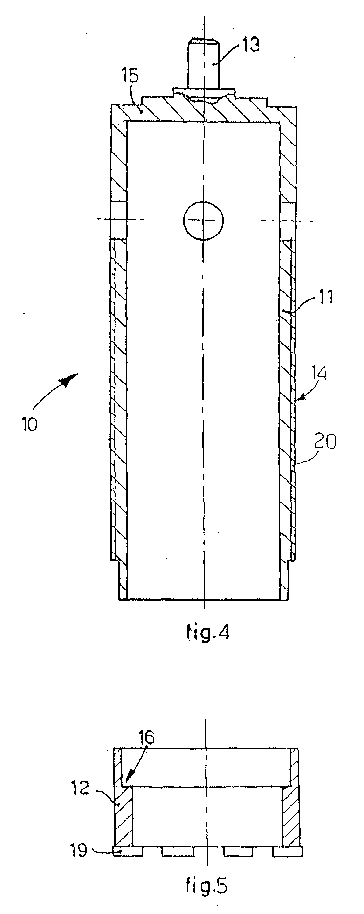

According to the variant shown in fig. 4, the flange 15 with the appendix 13 is made in a single body with the tubular body 11, and is also made of carbon fiber.

The crown 12 bearing the diamond sectors 19 is advantageously beveled in correspondence with its internal edge, to promote the removal of the core material.

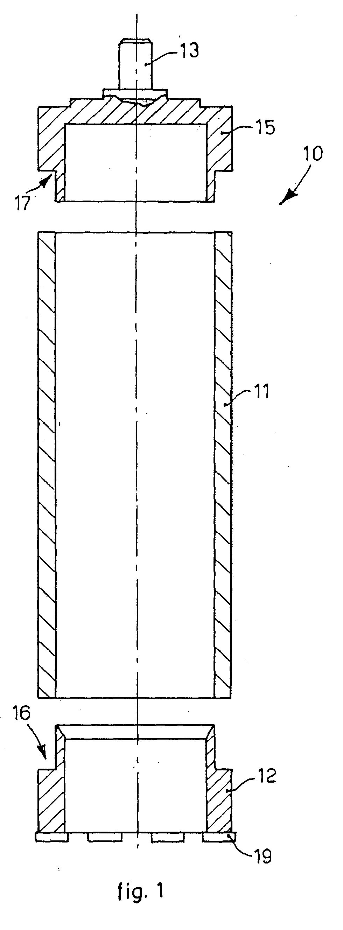

The crown 12 is preferably coupled with the tubular body 11 internally (figs. 1 and 2), although it is not excluded, as can be seen in the variant shown in fig. 5, that the coupling of the crown 12 to the tube 11 can be external.

In both cases, the crown 12 advantageously has a supporting ledge 16 for the end of the tubular body 11, in order to facilitate the correct attachment to the tubular body 11.

As we said, the tubular body 11 is preferably made of composite material based on carbon fibers, and is advantageously obtained with heat expanding resin.

In this case, the tubular body 11 is prepared in a semi-finished form, it is inserted into a mold, taken to the temperature at which the resin expands (for example 180°C), and left there until it is completely polymerized.

According to the invention, for use, the crown 12 with the diamond sectors 19 and the flange 15 with the appendix 13 are glued to the tubular body 11 (fig. 3).

In order to make the coupling stable, it is possible to use rivets, to be removed after use, or screws, or glues that can be melted with thinner or with heat.

It is clear that modifications and/or additions of parts may be made to the coring tool 10 as described heretofore, without departing from the field and scope of the present invention.

For example, it comes within the field of the present invention to provide that the tubular body 11 has a taper that widens from the end where it couples with the diamond teeth 19, towards the rear part, in order to facilitate the extraction of the core material.

It also comes within the field of the present invention to provide that the reinforcement and protection layer 14 is covered by at least a thin layer of composite material, in order to improve the aesthetic effect of the tool.

It is also clear that, although the present invention has been described with reference to some specific examples, a person of skill in the art shall certainly be able to achieve many other equivalent forms of coring tool, having the characteristics as set forth in the claims and hence all coming within the field of protection defined thereby.

## Claims

1. Tool for coring, for example for walls, comprising a tubular body (11) and an appendix (13) for attachment to a machine able to make it rotate, said tubular body (11) having diamond sectors (19) made on a crown or ring-nut (12) able to be attached to said tubular body (11), **characterized in that** said tubular body (11) is made of composite material and said crown or ring-nut (12) on which the diamond sectors (19) are present is made of composite material or of metal.

2. Tool as in claim 1, **characterized in that** said it also comprises a reinforcement and protection layer (14), associated with at least part of the length of said tubular body (11), disposed on the surface of said tubular body (11) or at least in proximity with said surface of said tubular body (11).

3. Tool as in claim 2, **characterized in that** said reinforcement and protection layer (14) is made of metal material.

4. Tool as in claim 1, **characterized in that** said reinforcement and protection layer (14) is made of a compound based on composite material and ceramic, or other similar compound.

5. Tool as in claim 3, **characterized in that** said composite material is carbon fiber.

6. Tool as in any claim hereinbefore, **characterized in that** said reinforcement and protection layer (14) comprises at least a sheet (20) wound onto said tubular body (11).

7. Tool as in any claim from 1 to 4, **characterized in that** said reinforcement and protection layer (14) comprises a strip (21) wound onto said tubular body (11).

8. Tool as in claim 6, **characterized in that** said strip (21) is wound in spirals on said tubular body (11).

9. Tool as in claim 7, **characterized in that** said spirals are adjacent.

10. Tool as in claim 7, **characterized in that** said spirals are distanced by a determinate pitch.

11. Tool as in claim 7, **characterized in that** said spirals overlap each other.

12. Tool as in claim 3, **characterized in that** said metal material is titanium.

13. Tool as in claim 1, **characterized in that** said reinforcement and protection layer (14) has a thickness comprised between about 700 micron and about 1000 micron.

14. Tool as in claim 1, **characterized in that** the composite material of the tubular body (11) and/or the ring-nut (12) is carbon fiber.

15. Tool as in claim 1, **characterized in that** said crown (12) has a positioning ledge (16) for the end of said tubular body (11).

16. Tool as in claim 15, **characterized in that** said crown (12) is associated externally with said tubular body (11).

17. Tool as in claim 15, **characterized in that** said crown (12) is associated internally with said tubular body (11).

18. Tool as in claim 1, **characterized in that** said tubular body (11) is made in a single piece with said appendix (13).

19. Tool as in claim 1, **characterized in that** said tubular body (11) is removably associated with a flange (15) on which said appendix (13) is present.

20. Tool as in any claim hereinbefore, **characterized in that** said tubular body (11) has a taper which widens from the end where it couples with the diamond teeth (19), towards the rear part.

21. Method to make a coring tool, for example for walls, comprising a tubular body (11) and an appendix (13) for attachment to a machine able to make it rotate, said tubular body (11) having diamond sectors (19) made on a crown or ring-nut (12) able to be attached to said tubular body (11), **characterized in that** it provides a first step in which a tubular body (11) is made of composite material, a second step in which a ring-nut or crown (12) made of metal or composite material is glued to said tubular body (11), on which ring-nut or crown (12) diamond sectors (19) are made, and a third step in which a reinforcement and protection layer (14), made of metal material or a compound based on composite material and ceramic, is associated with at least part of the length of said tubular body (11) and is disposed on the surface of said tubular body (11) or at least in proximity with said surface of said tubular body (11).

22. Method as in claim 21, **characterized in that** said reinforcement and protection layer (14) is applied by winding a sheet (20) onto said tubular body (11).

23. Method as in claim 21, **characterized in that** said reinforcement and protection layer (14) is applied by winding a strip (21) in spirals onto said tubular body (11).

24. Method as in claim 21, **characterized in that** said reinforcement and protection layer (14) is covered by another thin external layer of composite material.
